# EUROPÄISCHE PATENTSCHRIFT

(11) **EP 0 527 398 B1**
(45) Veröffentlichungstag und Bekanntmachung des Hinweises auf die Patenterteilung: **10.06.1998**
(21) Anmeldenummer: 92113045.6
(22) Anmeldetag: 31.07.1992
(51) Int. Cl.: F16L 3/10

(54) **Schelle für senkrecht hängende Rohrleitungen**
Bracket for vertically supported pipes
Collier pour conduites suspendues en position verticale

(30) Priorität: 08.08.1991 DE 4126268
(43) Veröffentlichungstag der Anmeldung: 17.02.1993
(73) Patentinhaber: Witzenmann GmbH Metallschlauch-Fabrik Pforzheim, D-75175 Pforzheim (DE)
(72) Erfinder: Berger, Peter W., Dipl.-Ing., W-7531 Pforzheim (DE); Degel, Peter, Dipl.-Ing., W-6653 Blieskastel (DE); Schmidsberger, Wolfgang, Dipl.-Ing., O-9627 Leubnitz (DE)
(74) Vertreter: Lemcke, Rupert, Dipl.-Ing.

(56) Entgegenhaltungen:
- EP-A- 0 427 880
- CH-A- 668 467
- DE-U- 7 412 348
- DE-U- 8 806 534
- GB-A- 2 133 110

## Beschreibung

Die Erfindung geht von einer Vertikalschelle gemäß dem Oberbegriff des Anspruchs 1 aus.

Eine derartige Vertikalschelle ist durch die DE 38 17 015 A1 bekannt. Nach einem Baukastensysterm aufgebaut, besteht die eigentliche Schelle aus mehreren in Rahmenform angeordneten Teilen, die für sich lose bleibend über ineinandergreifende Schlitzeinschnitte miteinander verbunden sind. Angeschraubte Sicherheitsleisten verhindern ein Auseinanderfallen der Teile. In der Mitte des Rahmens ist eine zweigeteilte Tragplatte mit kreisförmiger Ausnehmung in die Seitenteile eingelassen und verschraubt.

Der Schlitzeingriff der Teile kann in dieser Technik nicht spielfrei sein, so daß die Seitenteile unter Belastung entsprechend dem gegebenen Spiel eine von der Vertikalen abweichende Lage einnehmen. Die sich ergebende leichte Neigung der Seitenteile vernindert die Stabilität und damit die Tragfähigkeit der Schelle. Im übrigen beschränkt sich der tragende Querschnitt der Rahmenteile auf den nicnt geschlitzten Materialquerschnitt. Diese Abmessungen sind bestimmend für die mögliche Belastung. Die durch das Steckprinzip bedingten Querschnittsmaße der Teile müssen wesentlich größer ausgeführt werden und erfordern einen entsprechend hohen Materialaufwand, ohne daß dieser zur Tragfähigkeit beiträgt. Die gerade Form der Seitenteile führt im übrigen zu einer erheblichen Ausladung im Aufhängebereich.

Die Aufgabe der Erfindung besteht daher darin, eine Vertikalschelle zu schaffen, die bei möglichst geringem Materialaufwand eine optimale Tragfähigkeit und montagefreundliche Dimensionen gewährleistet.

Diese Aufgabe ist durch die kennzeichnenden Merkmale des Anspruches 1 gelöst. Weitere Ausgestaltungen ergeben sich aus den Ansprüchen 2 bis 9.

Die durch die Erfindung erzielten Vorteile bestehen insbesondere darin, daß der Querschnitt der tragenden jochförmig gebogenen Seitenteile materialsparend auf das tatsächlich notwendige Maß beschränkt bleibt, daß durch die Maßnahme der Gegenplatte eine echte Kastenform gegeben ist, die der Schelle eine erhöhte Stabilität verleiht, die durch ein Verspannen der Seitenteile im Schrägbereich noch erhöht wird, und daß die Abmessungen insbesondere im Aufhängebereich auf das unbedingt notwendige Maß reduziert sind.

Anhand von zwei Ausführungsbeispielen wird die Erfindung in Verbindung mit den Zeichnungen nachfolgend näher erläutert. Es zeigt:
Fig. 1 eine erste Ausführungsform einer Vertikalschelle gemäß der Erfindung in Draufsicht.
Fig. 2 den Gegenstand der Fig. 1 im Schnitt II-II.
Fig. 3 den Gegenstand der Fig. 1 im Schnitt III-III.
Fig. 4 eine zweite Ausführungsform einer Vertikalschelle gemäß der Erfindung in Draufsicht.
Fig.5 den Gegenstand der Fig.4 im Schnitt V-V.

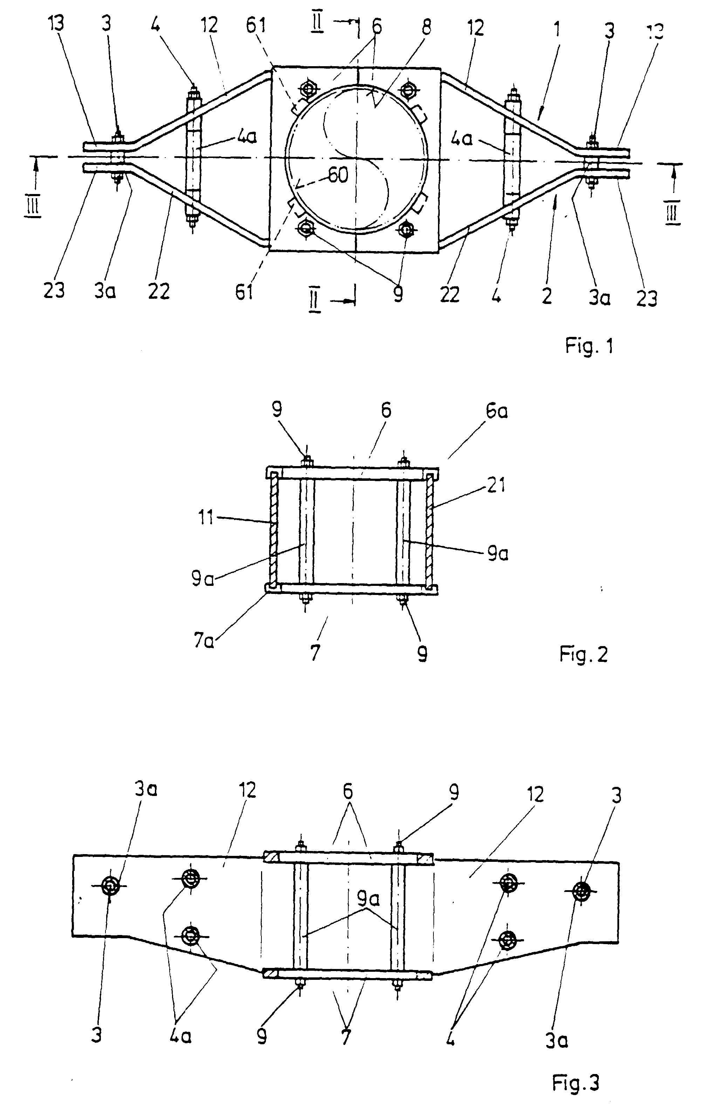

Die Figuren 1 bis 3 zeigen ein erstes Ausführungsbeispiel einer Vertikalschelle, wobei Fig.1 die Schelle in der Draufsicht zeigt, während die Figuren 2 und 3 die Schelle der Fig.1 im Schnitt II-II bzw. im Schnitt III-III zeigen.

Die Vertikalschelle hat zwei jochförmig gebogene Seitenteile 1 und 2, die spiegelbildlich zueinander angeordnet sind. Sie sind durch Abknickungen in einen mittleren Stützbereich 11 bzw. 21 (Fig.2) in rechts und links angrenzende Schrägbereiche 12 bzw. 22 und endseitige Aufhängebereiche 13 bzw. 23 unterteilt. Die Abknickungen sind so gewählt, daß die Seitenteile 1 und 2 in den Aufhängebereichen 13 und 23 zusammenlaufen und über Distanzringe 3a mittels Ankerschrauben 3 fest miteinander verbunden sind. Die Distanzringe 3a haben eine den angreifenden Anschlußteilen angepaßte Breite und eine Dicke, die eine gleichmäßige Verteilung der Traglast auf den auf Biegung beanspruchten Teil der Ankerschrauben 3 bewirkt. Die beiden Stützbereiche 11 und 21 (Fig.2) haben einen dem Außendurchmesser der abzustützenden Rohrleitung 60 entsprechenden Abstand. Die drei Bereiche der Seitenteile 1 und 2 sind gerade. Die Stützbereiche 11 und 21 naben die Breite einer zweigeteilten Tragplatte 6. Letztere hat eine dem Außendurchmesser der Rohrleitung 60 entsprechende kreisförmige Ausnehmung 8. Im montierten Zustand der Schelle stützt sich die Rohrleitung 60 z.B. mit an ihrem Außenumfang fest angeordnete Knaggen 61 auf der Tragplatte 6 ab. Die Tragplatte 6 hat quer zur Teilungslinie im Abstand der Stützbereiche 11 und 21 Nuten 6a, über die die Tragplatte 6 in formschlüssigem Eingriff mit den Seitenteilen 1 und 2 steht. Zur Erhöhung der Stabilisierung der Schelle ist spiegelbildlich zur Tragplatte eine Gegenplatte 7 gleicher Ausführung (Nuten 7a) von der Unterseite in formschlüssigem Eingriff mit den Seitenteilen 1 und 2. Spannbolzen 9 und zwischen den Platten 6 und 7 angeordnete Distanzrohre 9a verbinden die Seitenteile 1 und 2 und die Platten 6 und 7 zu einem verwindungssteifen Kasten im Bereich der Rohrleitungsauflage. Zur Erhöhung der Stabilität sind die Seitenteile 1 und 2 in cen Schrägbereichen 12 und 22 durch Spannbolzen 4 mit abstanchaltenden Distanzhülsen 4a fest miteinander verbunden.

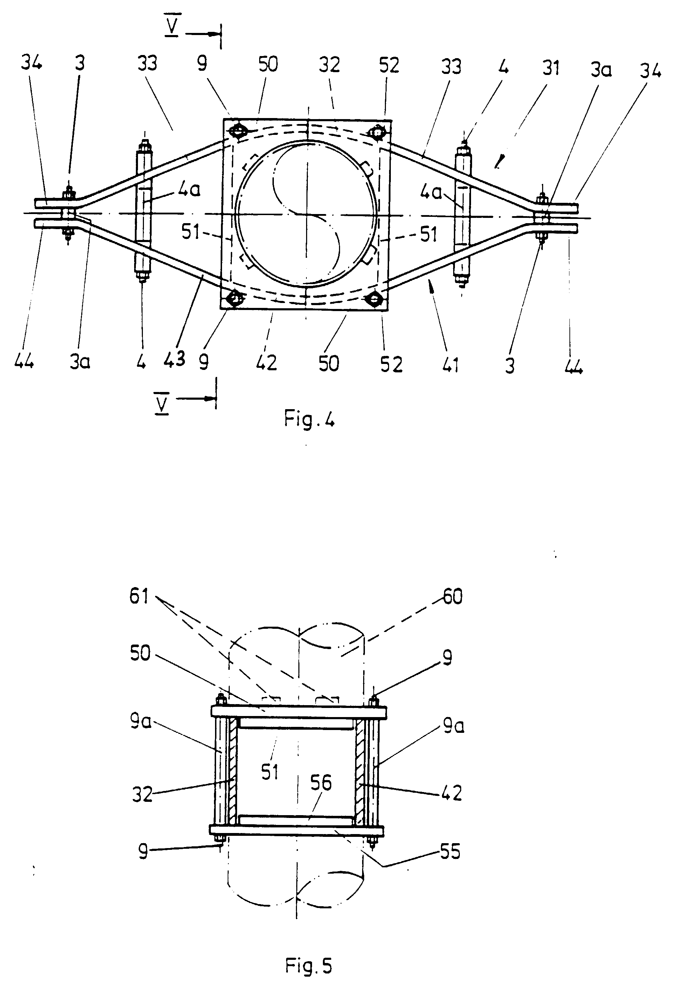

Die Figuren 4 und 5 zeigen eine Variante zum vorbeschriebenen Ausführungsbeispiel einer Vertikalschelle. Fig.4 stellt die Schelle in der Draufsicht dar, während Fig.5 die Schelle im Schnitt V-V zeigt. Für die Teile, die in Funktion und Ausführung mit denen des vorbeschriebenen Beispiels übereinstimmen, werden die gleichen Positionsbezeichnungen verwendet.

Der Unterschied zur vorbeschriebenen Ausführung einer Vertikalschelle besteht im wesentlichen darin, daß der übergang vom Stützbereich 32 bzw.42 zum Schrägbereich 33 bzw.43 und von diesem zum Aufhängebereich 34 bzw.44 kontinuierlich, d.h. knickfrei erfolgt. Dieses hat den Vorteil, daß eine derartige Jochform kostengünstiger herzustellen ist als die Knickausführung.

Wie Fig.4 erkennen läßt, ist der Stützbereich 32 und 42 der beiden Seitenteile 31 und 41 gewölbt, so daß die seitlichen Schrägbereiche 33 bzw.43 kontinuierlich ineinander übergenen. Für den übergang zu den Aufhängebereichen 34 bzw.44 ist ein möglichst großer Radius gewählt. Wie beim vorherigen Beispiel sind die beiden Seitenteile 31 und 41 spiegelbildlich zueinander angeordnet und in den Aufhängebereichen 34 bzw.44 durch Ankerschrauben 3 mit dazwischen angeordneten Distanzringen 3a fest miteinander verbunden.

Die formschlüssige Führung der Seitenteile 31 und 41 im mittleren Stützbereich 32 und 42 (Fig.5) erfolgt in diesem Fall nicht durch eine Nutenführung, sondern durch auf eine zweigeteilte Tragplatte 50 und eine ebenfalls zweigeteilte Gegenplatte 55 aufgesetzte Anschlagleisten 51 bzw. 56. Die Anschlagleisten 51 und 56 liegen bei den montierten Platten 50 und 55 quer zwischen den Seitenteilen 31 und 41 nane der übergangstellen zu den Schrägbereichen 33 und 43. Die Tragplatte 50 und die Gegenplatte entsprecnen denen ces vorhergehenden Beispiels. Durch die Wölbung der Seitenteile 31 und 41 liegen die Durchgangslöcher für die Spannschrauben 9 ausserhalb der Seitenteile 31 und 41. 3ei dieser Ausführung sind die Durchgangslöcher in beiden Platten 50 und 55 als Langlöcher ausgebildet, die in Längsrichtung des Jochs orientiert sind. Nur Fig.4 läßt die Langlöcher 52 erkennen. Durch die Langlöcher können die Spannoolzen 9 mit ihren Distantzrohren 9a von außen in Anlage an die Seitenteile 31 und 41 gebracht werden, so daß sie gleichzeitig als Führungselemente für die Seitenteile 31 und 41 im Stützbereich 32 bzw. 42 dienen. Die Schrägbereiche 33 und 43 sind in wesentlicnen gerade, nur im übergang zum Aufhängebereich 34 und 44 sind sie leicht gesogen. Auch in diesem Fall sind die Seitenteile in den Schrägbereichen 33 und 43 durch Spannbolzen 4 mit abstandhaltenden Distanzhülsen 4a fest miteinander verbunden.

Eine zeichnerisch nicht dargestellte Variante der Figuren 4 und 5 sieht Seitenteile vor, die einen U-förmigen Querschnitt haben. Die Teile weisen mit dem offenen U-Profil nach innen zur Rohr Leitung. Sie sind durch Kalt- oder Warmverformung entsprechend den Seitenteilen 31 und 41 der Fig.4 gebogen und im Aufhängebereich über Distanzringe und Ankerschrauben in vorbeschiebener Weise fest miteinander verbunden. Die Tragplatte und die Gegenplatte haben im Bereich der freien Schenkel der Seitenteile in Längsrichtung des Jochs orientierte Langlöcher, die mit Bohrungen in den Schenkeln der U-förmigen Seitenteile korrespondieren. Durch diese sind die Tragplatte und die Gegenplatte form- und kraftschlüssig mit den Seitenteilen des Jochs kastenförmig verbunden. Diese Ausführung eignet sich besonders für Rohrleitungen mit kleinem Durchmesser und geringer Wärmeabstrahlung.

## Patentansprüche

1. Vertikalschelle zum Abstützen von senkrecht oder schräg hängenden Rohrleitungen mit einer auf Seitenteilen der Schelle aufliegenden zweiteiligen Tragplatte, auf der sich die Rohrleitung über Knaggen, Zapfen oder Rundnocken abstützt, dadurch gekennzeichnet, daß die Seitenteile (1,2 bzw. 31,41) der Schelle jochförmig gebogen sind und spiegelbildlich zueinander in den Aufhängebereichen (13,23 bzw. 34,44) zusammenlaufen und daß die beiden Seitenteile (1,2 bzw. 31,41) mit der zweigeteilten Tragplatte (6,50) und einer ebenfalls zweigeteilten Gegenplatte (7,55) formschlüssig oder form- (6a,51) und wenigstens mittelbar kraftschlüssig (9,9a) verbunden sind.

2. Vertikalschelle nach Anspruch 1, dadurch gekennzeichnet, daβ die Seitenteile (1,2 bzw. 31,41) einen mittleren Stützbereich (11,21 bzw. 32,42) haben, an den beidseitig Schrägbereiche (12,22 bzw. 33,43) anschließen, die in die Aufhängebereiche (13,23 bzw. 34,44) übergehen.

3. Vertikalschelle nach Anspruch 1, dadurch gekennzeichnet, daß die Seitenteile (1,2 bzw. 31,41) im Aufhängebereich (13,23 bzw. 34,44) über Distanzringe (3a) und Ankerbolzen (3) im Abstand angreifender Anschlußteile fest miteinander verbunden sind und daß die Distanzringe (3a) eine Materialdicke haben, über die die Traglast gleichmäßig auf die tragende Länge der Bolzen (3) verteilt wird.

4. Vertikalschelle nach Anspruch 1 oder 2, dadurch gekennzeichnet, daß die Tragplatte (6) und die Gegenplatte (7) im Abstand der Stützoereiche (11,21) der beiden Seitenteile (1,2) der Schelle Nuten (6a,7a) haoen und daß die Nuten (6a,7a) eine der Materialdicke der Seitenteile (1,2) entsprechende Breite haben.

5. Vertikalschelle nach Anspruch 1 oder 2, dadurch gekennzeichnet, daβ die Tragplatte (50) und die Gegenplatte (55) mit Anschlagleisten (51 bzw. 56) versehen sind, zwischen denen die Seitenteile (31,41) formschlüssig geführt sind, und daß die zum Verspannen der beiden Platten (50,55) vorgesehenen Bolzen (9) und Distanzrohre (9a) so angeordnet sind, daß sie gleichzeitig als Führungselemente für die Seitenteile (31,41) im Stützbereich (32,42) dienen.

6. Vertikalschelle nach Anspruch 2, dadurch gekennzeichnet, daß die Stützbereiche (11,21), die Schrägoereiche (12,22) und die Aufhängebereiche (13,23) geradlinig verlaufen und und über Abknickungen ineinander übergehen.

7. Vertikalschelle nach Anspruch 2, dadurch gekennzeichnet, daß der Stützbereich (32,42) der Seitenteile (31,41) derart gebogen ist, daß ein knickfreier übergang zu den anschlieβenden Schrägbereichen (33,43) gegeben ist, und daβ der übergang zwischen den Schrägbereichen (33,43) und den Aufhängebereichen (34,44) ebenfalls knickfrei ist.

8. Vertikalschelle nach Anspruch 2, dadurch gekennzeichnet, daß die einander gegenüberliegenden Schrägbereiche (12,22 bzw. 33,43) der beiden Seitenteile (1,2 bzw. 31,41) über Bolzen (4) und Distanzhülsen (4a) miteinander verspannt sind.

9. Vertikalschelle nach Anspruch 1 oder 2, dadurch gekennzeichnet, daß die Seitenteile einen U-förmigen Querschnitt haben und daß die Tragplatte und die Gegenplatte nit den freien Schenkeln des U-Profils verschraubt sind.

## Claims

1. Vertical bracket for supporting vertically or obliquely suspended pipes, with a two-part bearing plate which lies on side parts of the bracket and on which the pipe is supported via cleats, pins or bosses, characterised in that the side parts (1, 2 or 31, 41) of the bracket are bent in the shape of a yoke and converge in mirror-image fashion in the suspension regions (13, 23 or 34, 44), and that the two side parts (1, 2 or 31, 41) are positively or positively (6a, 51) and at least indirectly non-positively (9, 9a) connected to the two-part bearing plate (6, 50) and a counter-plate (7, 55), which is likewise in two parts.

2. Vertical bracket according to claim 1, characterised in that the side parts (1, 2 or 31, 41) have a central support region (11, 21 or 32, 42) which is adjoined on both sides by oblique regions (12, 22 or 33, 43) merging into the suspension regions (13, 23 or 34, 44).

3. Vertical bracket according to claim 1, characterised in that the side parts (1, 2 or 31, 41) are firmly connected together in the suspension region (13, 23 or 34, 44) via distance rings (3a) and anchor bolts (3) at the spacing of active connecting parts, and that the distance rings (3a) have a material thickness via which the load is uniformly distributed over the bearing length of the bolts (3).

4. Vertical bracket according to claim 1 or 2, characterised in that the bearing plate (6) and the counter-plate (7) have grooves (6a, 7a) at the spacing of the support regions (11, 21) of the two side parts (1, 2) of the bracket, and that the grooves (6a, 7a) are of a width which corresponds to the material thickness of the side parts (1, 2).

5. Vertical bracket according to claim 1 or 2, characterised in that the bearing plate (50) and the counter-plate (55) are provided with limit bars (51 and 56, respectively), between which the side parts (31, 41) are positively guided, and that the bolts (9) and distance tubes (9a) provided to fasten the two plates (50, 55) are disposed such that they simultaneously serve as guide elements for the side parts (31, 41) in the support region (32, 42).

6. Vertical bracket according to claim 2, characterised in that the support regions (11, 21), the oblique regions (12, 22) and the suspension regions (13, 23) extend in rectilinear fashion and merge into one another via bends.

7. Vertical bracket according to claim 2, characterised in that the support region (32, 42) of the side parts (31, 41) is bent such that the transition to the adjoining oblique regions (33, 43) is without kinks, and that the transition between the oblique regions (33, 43) and the suspension regions (34, 44) is likewise without kinks.

8. Vertical bracket according to claim 2, characterised in that the oblique regions (12, 22 or 33, 43), which lie opposite one another, of the two side parts (1, 2 or 31, 41) are fastened together via bolts (4) and distance sleeves (4a).

9. Vertical bracket according to claim 1 or 2, characterised in that the side parts have a U-shaped cross section, and that the bearing plate and the counter-plate are screwed to the free legs of the U-section.

## Revendications

1. Collier pour supporter des conduites orientées verticalement ou en oblique, comportant une plaque d'appui en deux parties reposant sur des parties latérales du collier, sur laquelle la conduite prend appui par le biais de taquets, tenons ou ergots circulaires, caractérisé en ce que les parties latérales (1,2 ou 31,41) du collier sont courbées en forme de joug et convergent de façon symétrique dans les zones de suspension (13, 23, ou 34, 44), et en ce que les deux parties latérales (1,2 ou 31,41) sont reliées à la plaque d'appui en deux parties (6, 50) et à une contre-plaque également en deux parties (7, 55) par engagement positif ou par engagement positif (6a, 51) et adhérence au moins indirecte (9, 9a).

2. Collier selon la revendication 1, caractérisé en ce que les parties latérales (1,2 ou 31,41) comportent une zone d'appui centrale (11, 21 ou 32, 42) de part et d'autre de laquelle se raccordent des zones obliques (12, 22 ou 33, 43) qui deviennent les zones de suspension (13, 23 ou 34, 44).

3. Collier selon la revendication 1, caractérisé en ce que les parties latérales (1,2 ou 31,41) sont reliées fixement entre elles dans la zone de suspension (13,23 ou 34, 44) par le biais de bagues d'écartement (3a) et de boulons d'ancrage (3) qui maintiennent écartées des parties de contact, et en ce que les bagues d'écartement (3a) présentent une épaisseur permettant de répartir uniformément la charge sur la longueur porteuse des boulons (3).

4. Collier selon la revendication 1 ou 2, caractérisé en ce que la plaque d'appui (6) et la contre-plaque (7) comportent des rainures (6a, 7a) dans l'intervalle entre les zones d'appui (11,21) des deux parties latérales (1, 2) du collier, et en ce que les rainures (6a, 7a) présentent une largeur correspondant à l'épaisseur du matériau des parties latérales (1, 2).

5. Collier selon la revendication 1 ou 2, caractérisé en ce que la plaque d'appui (50) et la contre-plaque (55) sont munies de baguettes de butée (51 ou 56) entre lesquelles les parties latérales (31, 41) sont guidées par engagement positif, et en ce que les boulons (9) et les douilles d'écartement (9a) prévus pour immobiliser les deux plaques (50, 55) sont disposés de telle manière qu'ils servent simultanément d'éléments de guidage pour les parties latérales (31, 41) dans la zone d'appui (32, 42).

6. Collier selon la revendication 2, caractérisé en ce que les zones d'appui (11,21), les zones obliques (12,22) et les zones de suspension (13,23) sont rectilignes et sont séparées les unes des autres par des pliures.

7. Collier selon la revendication 2, caractérisé en ce que la zone d'appui (32,42) des parties latérales (31, 41) est courbée de telle manière que la transition vers les zones obliques (33, 43) y faisant suite est exempte de pliure, et en ce que la transition entre les zones obliques (33, 43) et les zones de suspension (34, 44) est également exempte de pliure.

8. Collier selon la revendication 2, caractérisé en ce que les zones obliques se faisant face (12, 22 ou 33, 43) des deux parties latérales (1, 2 ou 31, 41) sont immobilisées l'une par rapport à l'autre par le biais de boulons (4) et de douilles d'écartement (4a).

9. Collier selon la revendication 1 ou 2, caractérisé en ce que les parties latérales ont une section en U, et en ce que la plaque d'appui et la contre-plaque sont vissées sur les ailes libres du profil en U.
